# EUROPÄISCHE PATENTANMELDUNG

(11) **EP 2 626 659 A1**
(43) Veröffentlichungstag der Anmeldung: **14.08.2013**
(21) Anmeldenummer: 12002746.1
(22) Anmeldetag: 19.04.2012
(51) Int. Cl.: F27B 7/20, F27D 99/00, C04B 7/44, F23L 7/00

(54) **Herstellung von Zementklinker unter Verwendung eines Sekundärbrennstoffstroms**

(30) Priorität: 09.02.2012 DE 102012002527
(71) Anmelder: Linde Aktiengesellschaft, 80331 München (DE)
(72) Erfinder: Köder, Horst, 06258 Schkopau (DE)
(74) Vertreter: Gellner, Bernd

(57) **Zusammenfassung**

Die Erfindung betrifft ein Verfahren zur Herstellung von Zementklinker durch Sintern von Rohmehl in einem mit einem wenigstens einem Brenner (11, 110) betriebenen Drehrohrofen (10), wobei der wenigstens eine Brenner (11, 110) zumindest zeitweise mit wenigstens einem Sekundärbrennstoffstrom befeuert wird. Hierbei wird der wenigstens eine Sekundärbrennstoffstrom vor der Verbrennung wenigstens zeitweise mit einem Gasstrom beaufschlagt, der einen Sauerstoffgehalt von mehr als 21 Volumenprozent aufweist. Ferner ist ein entsprechender Brenner (11, 110) und eine entsprechende Anlage zur Herstellung von Zementklinker vorgesehen.

## Beschreibung

Die vorliegende Erfindung betrifft ein Verfahren zur Herstellung von Zementklinker unter Verwendung eines Brenners, der mit wenigstens einem Sekundärbrennstoffstrom befeuert wird, einen entsprechenden Brenner für einen Drehrohrofen und eine Anlage zur Herstellung von Zementklinker.

### Stand der Technik

Zementklinker ist ein Zwischenprodukt bei der Zementherstellung und wird durch Sintern von natürlichen oder sekundären Rohstoffen hergestellt. Hierzu wird üblicherweise ein Drehrohrofen verwendet. Um 1 t Portlandzementklinker zu erzeugen, werden ca. 1,6 t an Rohstoffen benötigt. Natürliche Rohstoffe sind vor allem Kalkstein, Ton oder Mergel, die bergmännisch in Steinbrüchen oder Tongruben abgebaut werden. Als sekundäre Rohstoffe können Gießereialtsande, Hochofenschlacken und dergleichen eingesetzt werden. Üblicherweise beträgt das Verhältnis der Rohstoffe ca. ¾ Kalkstein zu ¼ Ton. Die wesentlichen Parameter zur Beschreibung des Rohmaterials sind üblicherweise der Kalkstandard, der Silikatmodul und der Tonerdemodul.

Das fertig gemischte Rohmaterial (sogenanntes Rohgranulat) wird in einer Mahltrockenanlage im Verbundbetrieb mit heißem Abgas des Drehrohrofens getrocknet und zu sogenanntem Rohmehl gemahlen. Das Rohmehl wird in Silos zwischengelagert. Im sogenannten Direktbetrieb, bei dem keine Abgasverwertung in der Mahltrocknung erfolgt, wird das Abgas hingegen in Verdampfungskühlern abgekühlt. Die abschließende Entstaubung des abgekühlten Ofenabgases erfolgt in beiden Fällen durch Elektrofilter.

Das Rohmehl wird in eine Vorwärmeranlage, üblicherweise einen Zyklonvorwärmer, eingebracht und dort, meist ebenfalls mittels Ofenabgas, erwärmt. Das Rohmehl durchwandert dabei die gesamte Vorwärmeranlage im Gegenstrom zum Ofenabgas. Dabei wird das Rohmehl von ca. 50°C auf 800°C erwärmt, das Ofenabgas von ca. 1.100°C auf 350°C abgekühlt. Beim Erwärmen des Rohmehls erfolgt ab ca. 600°C eine teilweise Kalzination (Zersetzung, Entsäuerung) von Kalkstein bis zu ca. 20%. Aus CaCO₃ bildet sich hierbei CaO + CO₂. Durch einen sogenannten Kalzinator am Ofeneinlauf läßt sich eine Entsäuerung von bis zu 90% erzielen.

Die noch fehlende Kalzination erfolgt im Drehrohr des Drehrohrofens. Das Rohmehl gelangt dabei am Ofeneinlauf in das Drehrohr und wird unter ständiger Wärmezufuhr erwärmt. Dabei kommt es zu unterschiedlichen chemisch-physikalischen Vorgängen, die letztendlich dazu führen, daß aus dem Rohmehl die gewünschten Klinkermineralien gesintert werden.

Unter Verwendung eines Brenners wird der Klinker im Drehrohrofen auf eine Temperatur von ca. 1.450°C und mehr erhitzt, wofür eine Primärflammentemperatur von ca. 2.000°C erforderlich ist. Die Kühlung im Drehrohr nach der Sinterung muß rasch erfolgen, um ein Zerfallen der Klinkerphasen zu verhindern. Der aus dem Drehrohr ausgetragene Klinker wird anschließend durch Luftzufuhr in Kühlern (z.B. Rostkühlern) weiter abgekühlt. Die heiße Kühlerluft wird üblicherweise als Sekundär- oder Tertiärluft zur Feuerung im Drehrohrofen verwendet und koaxial zum Brennerkopf eingebracht.

Die Klinkerherstellung ist ein sehr energieintensiver Prozess. Die Erzeugung von einer Tonne Klinker bedingt einen spezifischen Wärmeverbrauch von rund 3.500 MJ. Als sogenannte Primär- oder Regelbrennstoffe werden dabei neben Steinkohle und schwerem Heizöl auch Braunkohle, Petrolkoks, Erdgas oder leichtes Heizöl eingesetzt.

Neben den Regelbrennstoffen setzt die Zementindustrie in den letzten Jahren immer mehr auf sogenannte Sekundär- oder Ersatzbrennstoffe. Hierunter werden Energieträger verstanden, die in industriellen Prozessen oder im kommunalen Bereich als Abfälle anfallen, wie beispielsweise Altreifen, Kunststoffabfälle, Altöle, Lösungsmittel, Tiermehl oder Papierfaserreststoffe. Sekundärbrennstoffe (z.B. Altreifen) können entweder durch geeignete Öffnungen direkt in den Drehrohrofen eingebracht oder, ggf. zerkleinert, neben dem Primärbrennstoff einem entsprechend ausgelegten Brenner zugeführt werden. Die parallele Verwendung mehrerer Sekundärbrennstoffe, auch in unterschiedlichen Aggregatzuständen, ist üblich.

Beim Einsatz von Sekundärbrennstoffen muss unter anderem gewährleistet sein, dass die Qualität und die Gleichmäßigkeit des Produktes Zement sowie die Sicherheit der Prozeßführung nicht beeinträchtigt wird.

Der Einsatz von Sekundärbrennstoffen in Brennern bewirkt jedoch bisweilen beträchtliche Schwankungen bei der Klinkerleistung und eine instabile Verbrennung. Bei einer Erhöhung des Anteils an Sekundärbrennstoffen erfolgt eine Abschaltung des Brenners, wodurch ein anschließender mehrstündiger Anfahrprozess erforderlich wird.

Es besteht daher der Bedarf nach verbesserten Möglichkeiten zur Herstellung von Zementklinker unter Einsatz von Sekundärbrennstoffen.

### Offenbarung der Erfindung

Vor diesem Hintergrund schlägt die vorliegende Erfindung ein Verfahren zur Herstellung von Zementklinker unter Verwendung eines wenigstens zeitweise mit wenigstens einem Sekundärbrennstoffstrom befeuerten Brenners, einen entsprechenden Brenner für einen Drehrohrofen und eine Anlage zur Herstellung von Zementklinker mit den Merkmalen der unabhängigen Patentansprüche vor. Bevorzugte Ausgestaltungen sind Gegenstand der Unteransprüche sowie der nachfolgenden Beschreibung.

Das erfindungsgemäße Verfahren kommt insbesondere bei der Herstellung von Zementklinker durch Sintern von Rohmehl in einem mit einem Brenner befeuerten Drehrohrofen zum Einsatz. Erfindungsgemäß wird dabei vorgeschlagen, den Sekundärbrennstoffstrom zumindest zeitweise mit einem Gasstrom zu beaufschlagen, der einen Sauerstoffgehalt von mehr als 21 Volumenprozent (Vol.-%) aufweist.

Erfindungsgemäß erfolgt damit also eine Anreicherung des des Sekundärbrennstoffstroms auf einen gegenüber atmosphärischer Luft erhöhten Sauerstoffgehalt. Feste Primär- und Sekundärbrennstoffe (z.B. Pulver, Granulate, Kunststoffschnipsel) werden dem Brenner i.d.R. mittels Luftförderung zugeführt, also z.B. unter Verwendung entsprechender Gebläse in die Brennzone des Brenners eingeblasen. Einem derart erzeugten Sekundärbrennstoffstrom kann mittels einer im Rahmen dieser Anmeldung als "Sauerstoffmischer" bezeichneten Einrichtung vor der Verbrennung Sauerstoff oder ein Gasstrom mit dem zuvor erläuterten Sauerstoffgehalt beigemischt werden. Hierbei kann reiner Sauerstoff oder ein vorgemischtes Luft-Sauerstoff-Gemisch als Gasstrom verwendet werden.

Ist im Rahmen dieser Anmeldung dabei von "reinem" Sauerstoff die Rede, umfasst dies auch Sauerstoff mit einem Anteil von Verunreinigungen und/oder Fremdgasen, z.B. sogenannten "technischen" Sauerstoff.

Ist im Rahmen dieser Anmeldung von "Sekundärbrennstoffen" die Rede, seien darunter sämtliche zuvor genannten Sekundärbrennstoffe verstanden, insbesondere entsprechende thermisch verwertbare Abfälle. Der Begriff "Sekundärbrennstoffe" umfasst dabei auch sogenannte "Ersatzbrennstoffe", die sich von Sekundärbrennstoffen z.B. durch ihre geringere Aufbereitungstiefe unterscheiden. Vorteilhafterweise werden diese in entsprechend getrockneter und/oder förderfähiger Form, z.B. in Form von Pulvern, Mehlen, Granulaten, Schnipseln und dergleichen eingesetzt.

Insbesondere eignet sich das vorgeschlagene Verfahren zur Verwendung mit Kunststoffschnipseln und getrockneten hoch- und niederkalorischen biologischen Abfällen, wie sie beispielsweise in Industriebetrieben, der Landwirtschaft oder in Schlachthöfen anfallen oder bei der Abfallbehandlung aus Haus- oder Industriemüll ausgesondert werden können. Das Verfahren eignet sich in besonderer Weise zur Verwendung von sogenanntem RDF (Refuse Derived Fuel), durch Aufbereitungsschritte wie Störstoffauslese, Grobklassierung, Siebzerkleinerung, Magnetabscheidung und Windsichtung aus Abfall gewonnenem Brennstoff. Durch die Sauerstoffzugabe ergibt sich die Möglichkeit einer vollständigen thermischen Nutzung auch niederkalorischer Abfallfraktionen.

Die vorliegende Erfindung ist dabei nicht auf die Verwendung einer Art von Sekundärbrennstoff oder nur eines Sekundärbrennstoffstroms beschränkt, vielmehr können eine Vielzahl an primären und sekundären Brennstoffen parallel eingesetzt werden. Typischerweise kommen in entsprechenden Anlagen z.B. Lösemittel, Tiermehl, Reifen und Kunststoffabfall parallel zum Einsatz. Als Primärbrennstoff wird beispielsweise Kohlestaub verwendet. Sämtliche der genannten Materialien können mittels eines oder mehrerer Luftströme gefördert und/oder mittels weiterer Luftströme umhüllt und/oder zerstäubt werden, wozu entsprechende Förder- und/oder Zerstäuberanlagen vorgesehen sein können. Wie im Zusammenhang mit den Figuren näher erläutert, kommen hierbei beispielsweise koaxiale Rohranordnungen zum Einblasen von Luft zum Einsatz.

Durch die Beaufschlagung mit dem Gasstrom wird vorteilhafterweise ein mit Sauerstoff angereicherter Sekundärbrennstoffstrom erzeugt, der einen Sauerstoffgehalt von mehr als 21 Volumenprozent, insbesondere von 21 bis 100 Volumenprozent, beispielsweise von 30 bis 80, 30 bis 50 oder 50 bis 80 Volumenprozent aufweist. In industriell betriebenen Anlagen zur Herstellung von Zementklinker, in denen Kunststoffschnipsel als Sekundärbrennstoff eingesetzt werden, wird üblicherweise eine Förderluftmenge von mehreren tausend Normkubikmetern pro Stunde (Nm³/h) verwendet, die mit einer Geschwindigkeit von über 50 m/s strömt. Vorteilhafterweise wird diese Menge um die Menge des eingesetzten sauerstoffhaltigen Gasstroms reduziert. Das Verhältnis von Luft zu Sauerstoff (beim Einsatz von reinem Sauerstoff als sauerstoffhaltigen Gasstrom) kann dabei im Bereich von 15:1 bis 3:1 liegen. Die tatsächlich verwendeten Werte richten sich nach den Brenneigenschaften des Sekundärbrennstoffs (z.B. dessen Heizwert), dem Umfang, in dem der Sekundärbrennstoff eingesetzt wird und, damit zusammenhängend, Wirtschaftlichkeitsberechnungen.

Die Erhöhung des Sauerstoffgehalts ermöglicht eine besonders kosteneffiziente Klinkerproduktion, weil hierdurch der Anteil an billigem Sekundärbrennstoff gegenüber teurem Primärbrennstoff erhöht werden kann, ohne die Stabilität des Brennverfahrens negativ zu beeinflussen. Hierdurch lässt sich der Verbrauch an fossilen Primärenergieträgern wie beispielsweise Kohle einsparen und eine sinnvolle Verwertung entsprechender Abfallstoffe vornehmen.

Das erfindungsgemäße Verfahren erlaubt vorteilhafterweise eine Erhöhung des Anteils an Sekundärbrennstoff auf einen Wert von über 85 Masseprozent des insgesamt verbrannten Brennstoffs, was einer Steigerung um ca. 5 Masseprozent gegenüber herkömmlichen Verfahren entspricht. Bei Verwendung des erfindungsgemäßen Verfahrens können beispielsweise über 10 t/h Kunststoffschnipsel verbrannt werden. Die Menge kann dabei gegenüber herkömmlichen Verfahren um mehr als 20% gesteigert werden, ohne dass negative Auswirkungen auf den Brennprozess beobachtet würden. Die Menge der eingesetzten Kohle reduziert sich entsprechend.

Die Leistung der vorliegend in Frage kommenden Anlagen beträgt mehrere tausend Tonnen Klinker pro Tag. Das erfindungsgemäße Verfahren erlaubt eine Steigerung der Produktionsrate um mehrere Prozent. Der gesteigerte Energiebedarf wird durch die Erhöhung der Menge an Sekundärbrennstoff gedeckt. Die eingesetzte Kohlemenge kann gleichzeitig reduziert werden. Unter Verwendung des erfindungsgemäßen Verfahrens kann eine Erhöhung der Sinterzonentemperatur des Drehrohrofens und eine Verringerung der Abgastemperatur beobachtet werden.

Das erfindungsgemäße Verfahren und die entsprechenden Vorrichtungen ermöglichen eine Stabilisierung des Verbrennungsprozesses bei gleichbleibender Klinkerqualität. Ferner kann eine entsprechende Anlage auch bei der Verwendung von Sekundärbrennstoffen sehr schnell angefahren werden. Erfindungsgemäß reduziert sich der Anfahrzeitraum von ca. sechs auf ca. drei Stunden.

Erfindungsgemäß wird ferner ein Brenner für einen Drehrohrofen zum Sintern von Rohmehl zu Zementklinker, der zur Speisung mit wenigstens einem Sekundärbrennstoffstrom eingerichtet ist und wenigstens eine Sekundärbrennstoffleitung aufweist, vorgeschlagen. Die wenigstens eine Sekundärbrennstoffleitung umfasst wenigstens einen Sauerstoffmischer, der zur Beaufschlagung des wenigstens einen Sekundärbrennstoffsstroms mit einem Gasstrom eingerichtet ist, der einen Sauerstoffgehalt von mehr als 21 Volumenprozent aufweist.

Für Drehrohröfen verwendete Brenner weisen typischerweise externe Zuleitungen auf, mittels derer der Brenner an entsprechende Fördereinrichtungen, Gebläse, Tanks und dergleichen angeschlossen ist. Ferner sind im Brenner Kanäle vorgesehen, in denen z.B. Brennstoff oder Luft in die Brennzone transportiert wird. Der Begriff "Sekundärbrennstoffleitung" umfasst dabei im Rahmen dieser Anmeldung ein extern des Brenners angeordnetes Anschlussrohr (also eine Zuleitung), aber auch einen innerhalb des Brenners angeordneten Kanal. Umfasst eine derartige Sekundärbrennstoffleitung einen Sauerstoffmischer, kann dieser damit, wie unten näher erläutert, innerhalb des Brenners oder in der Zuleitung stromaufwärtig des Brenners angeordnet sein.

Der Sauerstoffmischer umfasst vorteilhafterweise ein Zentralrohr zum Leiten des Sekundärbrennstoffsstroms und wenigstens eine in das Zentralrohr mündende Einlassdüse. Das Zentralrohr ist dabei mit der Sekundärbrennstoffleitung fluidisch gekoppelt und kann einen identischen Innendurchmesser wie diese aufweisen. Andere Geometrien sind ebenfalls möglich, wenn hierdurch eine vorteilhafte Einbringung des Sauerstoffs in den Sekundärbrennstoffstrom erzielt werden kann. Insbesondere bei Anordnung innerhalb eines Brenners kann das Zentralrohr auch integral mit der Sekundärbrennstoffleitung, und damit als Teil dieser, ausgebildet sein.

Eine Einlassdüse muss nicht notwendigerweise eine klassische Düsenform aufweisen sondern kann auch als Einströmrohr ausgebildet sein. Über eine Einlassdüse kann der erwähnte sauerstoffhaltige Gasstrom oder reiner Sauerstoff zu dem im Zentralrohr strömenden Sekundärbrennstoffstrom zugeführt werden. Im Zentralrohr strömt bei Betrieb des Brenners der Sekundärbrennstoffstrom, vorteilhafterweise unter Verwendung von Förderluft. Der Sauerstoffmischer weist z.B. eine Länge von einem Meter auf.

Eine besonders gute und homogene Sauerstoffzumischung wird erzielt, wenn eine ausreichend lange Durchmischungsstrecke vorgesehen ist. In entsprechenden Anlagen verwendete Brenner besitzen eine Länge von bis beispielsweise 10 m. Wird der Sauerstoffmischer in der Sekundärbrennstoffleitung unmittelbar vor dem Brenner angeordnet, ergibt sich damit eine Mischstrecke von 10 m. Diese vorgesehene Anordnung erfordert zusätzliche Maßnahmen, um eine Rückzündung des Sekundärbrennstoffstroms in der Sekundärbrennstoffleitung sicher zu verhindern.

Als besonders vorteilhaft hat sich in diesem Zusammenhang die Verwendung eines Sauerstoffmischers erwiesen, bei dem die wenigstens eine Einlassdüse in einem spitzen Winkel zur Achse des Zentralrohrs und/oder zu einer Fließrichtung des Sekundärbrennstoffstroms in das Zentralrohr mündet. Vorteilhafterweise wird dadurch kein Sekundärbrennstoff in die Einlassdüsen eingetragen, so dass diese nicht verstopfen können. Durch die dem aus den Einlassdüsen austretenden Gasstrom aufgeprägte Richtungskomponente, die zur Strömung des Sekundärbrennstoffstroms leicht angestellt bzw. geneigt ist, wird der Fluss des Sekundärbrennstoffs nicht gestört und gleichzeitig eine gute Durchmischung erzielt. Verwendbare Winkel umfassen z.B. 10° bis 80°, besonders vorteilhaft sind Anordnungen im Bereich von 20° bis 40°, beispielsweise 30°.

Besonders vorteilhaft sind Sauerstoffmischer, bei denen mehrere Einlassdüsen vorgesehen sind, die wenigstens teilweise gleichmäßig um einen Umfang des Zentralrohrs verteilt angeodnet sind. Bei extern des Brenners angeordneten Sauerstoffmischern hat sich beispielsweise die Verwendung von drei Einlassdüsen, die in radialen Winkeln von 120° zueinander kreisförmig um das Zentralrohr des Sauerstoffmischers angeordnet sind, als besonders vorteilhaft erwiesen. Hierdurch ergibt sich eine besonders homogene Vermischung mit dem Sekundärbrennstoffstrom bei nur minimalem konstruktivem Aufwand. Bei Sauerstoffmischern innerhalb des Brenners sind vorteilhafterweise vier entsprechend angeordnete Einlassdüsen, die dann Radialwinkel von 90° zueinander aufweisen, vorgesehen. Hiermit kann trotz einer geringeren Mischstrecke eine gute Durchmischung sichergestellt werden.

Die Einlassdüsen sind vorteilhafterweise an einen gemeinsamen Sauerstofftank angeschlossen und werden nach Maßgabe entsprechender Steuer- und/oder Regelmittel mit dem Gasstrom beaufschlagt. Ein Sauerstofftank kann beispielsweise als Flüssigsauerstofftank ausgebildet sein und einen Verdampfer aufweisen. Dem Verdampfer kann ein Verteiler nachgeschaltet sein.

Vorteilhafterweise kann in den Sauerstoffmischer, d.h. in die Einlassdüsen, wahlweise der (sauerstoffhaltige) Gasstrom, Luft und/oder Stickstoff eingespeist werden. Die Einlassdüsen weisen hierzu ihrerseits in sie mündende Zuleitungen für die entsprechenden Medien auf. Das Einspeisen von Luft ist dabei insbesondere bei einem sogenannten "Standby"-Betrieb vorteilhaft, in dem der Brenner außer Betrieb ist. Durch Bilden eines Luftimpulses wird ein Eindringen von Sekundärbrennstoff in die Einströmdüsen verhindert, wenn keine Zufuhr von Sauerstoff erforderlich ist.

Der Sauerstoffmischer weist vorteilhafterweise Temperatur- oder Drucksensoren auf. Auf Grundlage mittels dieser gemessener Temperatur- oder Druckwerte kann eine Beaufschlagung des Sekundärbrennstoffstroms mit dem jeweiligen Gas erfolgen. Beispielsweise kann bei Überschreiten eines bestimmten Drucks (z.B. aufgrund einer Blockade im Brenner aufgrund einer vorzeitigen Entzündung oder eines Aufschmelzens der Sekundärbrennstoffe) eine Stickstoffspülung der Sekundärbrennstoffleitung erfolgen, die zu einem Erlöschen der thermischen Reaktion führt. Gleiches gilt bei Überschreiten einer definierten Temperatur. Übertemperaturen und die Effekte einer unerwünschten Rückzündung des Sekundärbrennstoffs werden hierdurch sicher vermieden. Die Strömungsgeschwindigkeit des Sekundärbrennstoffstroms wird im Betrieb des Brenners stets höher als dessen Rückzündgeschwindigkeit eingestellt. Sinkt jedoch die Förderluftmenge, z.B. aufgrund einer Störung, oder bildet sich eine Blockade in der Zuleitung, würde gegebenenfalls die Rückzündgeschwindigkeit überschritten. Durch die Einspeisung von Stickstoff kann in diesem Fall ein weiteres Rückzünden, z.B. in einen Sekundärbrennstoffsilo, sicher verhindert werden.

Die Geschwindigkeit des Sekundärbrennstoffstroms definiert sich über die kalte (Primär-) Luftmenge, mit der der Sekundärbrennstoff gefördert wird. Erfindungsgemäß kann durch einen hohen Sauerstoffimpuls eine gute Mischung der Sekundärbrennstoffe mit dem Oxidationsmittel (Sauerstoff und Luft) bewirkt werden. Die kalte Primärluftmenge wird dabei um den zugeführten Anteil des sauerstoffhaltigen Gasstroms bzw. des Sauerstoffs reduziert. Beispielsweise werden einer entsprechenden Anlage 600 Normkubikmeter pro Stunde Sauerstoff zugeführt und die Luftmenge entsprechend um 600 4,77 =2.866 Normkubikmeter Luft reduziert. Dies trägt zur einer Energieeinsparung bei, weil die Förderleistung enstprechend gesenkt werden kann. Weiterhin wird der N₂-Ballast im Ofen reduziert, was einer Stickoxid-(NOX-)Bildung entgengenwirkt und den feuerungstechnischen Wirkungsgrad verbessert.

In den erläuterten Brennern kann ein Sauerstoffmischer in der Sekundärbrennstoffleitung im Brenner selbst oder (unmittelbar) vor dem Brenner angeordnet sein. Eine Anordnung vor dem Brenner ergibt eine besonders lange Mischstrecke. Die Anordnung in der Nähe der Austrittsmündung des Brenners gewährleistet eine einfache und preiswerte sicherheitstechnische Überwachung des Mischprozesses, da die Rückzündgefahr reduziert wird. Insbesondere bei einer Anordnung im Brenner kann auch ein Luftstrom, z.B. die den Sekundärbrennstoffstrom umhüllende Drallluft, die in die Brennzone eingeleitet wird, zusätzlich mit Sauerstoff versetzt werden. Beispielsweise kann hierzu eine Ringdüse im Drallluftkanal Verwendung finden.

Eine erfindungsgemäße Anlage zur Herstellung von Zementklinker aus Rohmehl, in der das zuvor erläuterte Verfahren implementiert sein kann, weist einen Brennofen mit wenigstens einem zumindest zeitweise mit einem Sekundärbrennstoffstrom befeuerbaren Brenner auf. Der Brenner ist wie zuvor erläutert ausgebildet. Durch die Implementierung des erläuterten Verfahrens werden die genannten Vorteile erzielt.

Die Erhöhung des Sauerstoffanteils im Sekundärbrennstoff führt insgesamt zu einer Erhöhung der Flammtemperatur und damit zur Steigerung der Wärmeübertragung durch Strahlung. Hierdurch wird der Sekundärbrennstoffstrom besser vorgewärmt, verdampft, vergast und schließlich verbrannt.

Die erfindungsgemäßen Maßnahmen können auch in existierenden Zementwerken nachgerüstet werden. Im einfachsten Fall ist dabei lediglich ein entsprechender Sauerstoffmischer mit der zugehörigen Steuer- bzw. Regeltechnik auszustatten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnung ausführlich beschrieben.

Figurenbeschreibung
- Figur 1: zeigt eine Anlage zur Herstellung von Zement in schematischer Darstellung, die erfindungsgemäß arbeiten kann.
- Figur 2: zeigt einen Brenner für einen Drehrohrofen in schematischer Darstellung, der erfindungsgemäß betrieben werden kann.
- Figur 3: zeigt einen Sauerstoffmischer gemäß einer besonders bevorzugten Ausführungsform der Erfindung in schematischer Darstellung.
- Figur 4: zeigt einen Brenner mit einem Sauerstoffmischer gemäß einer besonders bevorzugten Ausführungsform der Erfindung in schematischer Darstellung.

In den Figuren sind gleiche oder gleichwirkende Komponenten mit identischen Bezugszeichen angegeben, auf eine wiederholte Erläuterung wird der Übersichtlichkeit halber verzichtet.

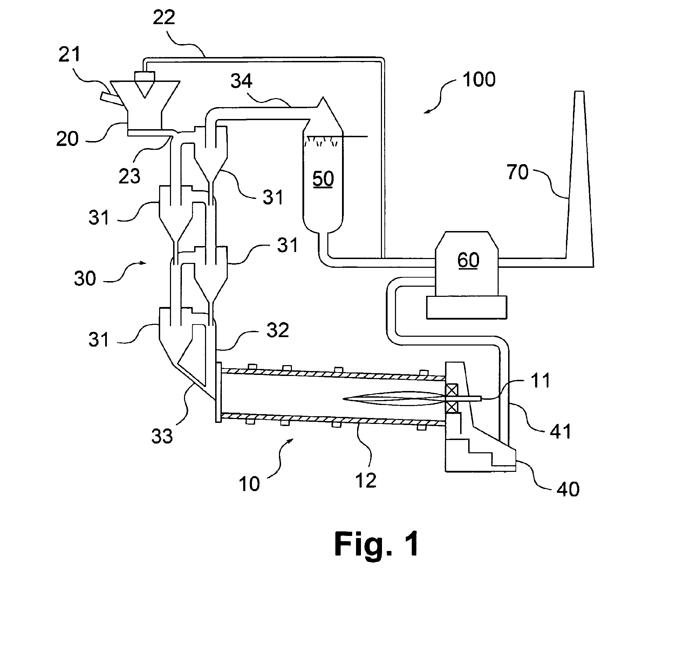

In Figur 1 ist eine Anlage zur Herstellung von Zement, insbesondere zur Herstellung von sogenanntem "grauem" Zement, schematisch dargestellt und insgesamt mit 100 bezeichnet. Bei der Anlage 100, die erfindungsgemäß arbeiten kann, handelt es sich um eine Drehofenanlage mit einem Drehrohr- bzw. Drehofen 10.

Die Anlage verfügt über eine Mahleinheit 20 in Form einer sogenannten Rohmühle, der über eine Einfüllöffnung 21 kontinuierlich Rohgranulat, z.B. gebrochener Kalkstein und Ton, zugeführt wird. Die Mahleinheit 20 ist, wie eingangs erläutert, zur Mahltrocknung ausgebildet, wobei im sogenannten Verbundbetrieb zur Trocknung ein erwärmter Luftstrom über eine Leitung 22 zugeführt werden kann. Ein Mahlwerk der Mahleinheit 20 ist der Übersichtlichkeit halber nicht dargestellt.

In der Mahleinheit 20 erzeugtes Rohmehl gelangt, ggf. nach Zwischenlagerung in nicht dargestellten Tanks, über eine Leitung 23 in eine Vorwärmeinheit 30, die im Beispiel als Zyklonvorwärmer mit einer Anzahl Vorwärmstufen 31 ausgebildet ist. Die Anzahl der Vorwärmstufen 31 ist nicht beschränkt und beträgt typischerweise sechs. In der Vorwärmeinheit 30 wird das über die Leitung 22 zugeführte Rohmehl mittels Ofenabgas aus dem Drehrohrofen 10, das über eine Leitung 32 zugeführt wird, im eingangs erwähnten Umfang vorgewärmt. Das vorgewärmte Rohmehl wird über eine Leitung 33 dem Drehofen 10 zugeführt. Ein Vorkalzinator kann vorgesehen sein, ist jedoch nicht dargestellt. Abluft wird über eine Abluftleitung 34 abgeführt.

Der Drehofen 10 verfügt über ein mittels eines Brenners 11 von seinem unteren Ende aus beheiztes, leicht geneigtes Drehrohr 12, das während des Betriebs kontinuierlich rotiert. In dem Drehofen 10 wird das Rohmehl zu Zementklinker gebrannt.

Zur Abkühlung ist ein Klinkerkühler 40, beispielsweise ein Rostkühler, vorgesehen, in dem der Klinker mit extern zugeführter Luft auf eine handhabbare Temperatur abgekühlt wird (sogenannter Kaltklinker). Die Abluft aus dem Klinkerkühler 40 wird zum einem Teil als sogenannte Sekundärluft in dem Drehofen 10 verwendet und zu einem anderen Teil über eine Leitung 41 abgeführt. Die Sekundärluft strömt gegebenenfalls koaxial zum Brenner 11 in den Drehofen 10.

Zur Kühlung und Reinigung des Abluftstroms der Vorwärmeinheit ist eine Kühleinheit 50, z.B. in Form eines Verdampfungskühlers, vorgesehen. Die abgekühlte Abluft der Kühleinheit 50 sowie der Abluftstrom des Klinkerkühlers 50 werden mittels einer Entstaubungseinheit 60, z.B. unter Verwendung von Elektrofiltern, entstaubt, und verlassen über einen Schlot 70 die Anlage 100.

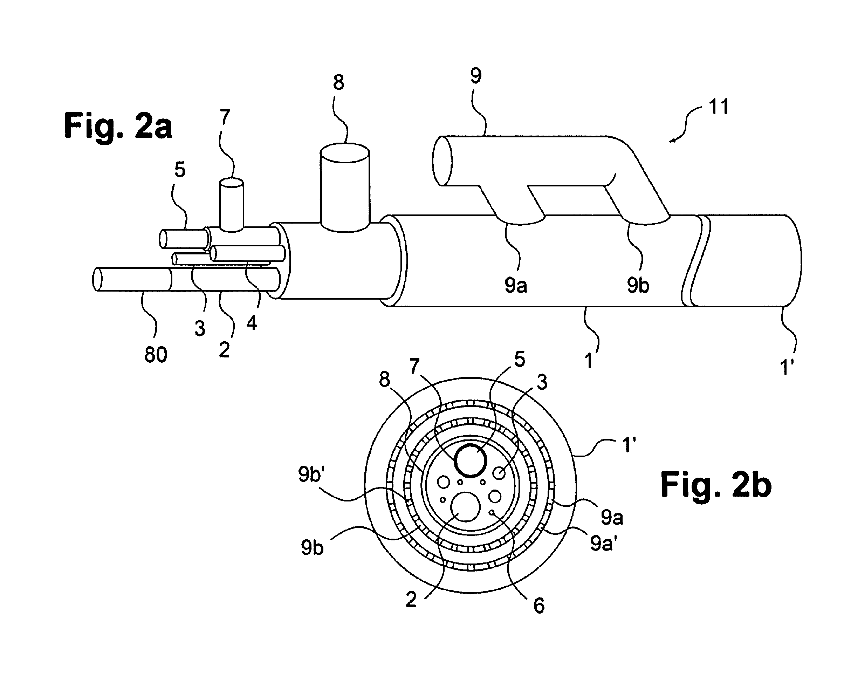

In der Figur 2 ist ein Brenner 11 für einen Drehrohrofen 10, der erfindungsgemäß betrieben werden kann, stark schematisiert dargestellt. Die nachfolgende Darstellung der einzelnen Zuleitungen und Brennerkanäle ist rein beispielhaft und nicht einschränkend. Brenner 11 für Drehrohröfen 10 können unterschiedlich konfiguriert und zum Betrieb mit unterschiedlichsten Brennstoffen eingerichtet sein. Hierbei können Zuleitungen und Kanäle für einen oder mehrere feste, flüssige oder gasförmige Brennstoffe vorgesehen sein. Diese können jeweils mit Luft gefördert, transportiert und/oder zerstäubt werden, wozu entsprechende Anschlüsse und/oder koaxiale Leitungen vorgesehen sein können. Die Luftkanäle können dabei auch über unterschiedlich konfigurierte Leit-und/oder Drallkörper verfügen, mittels welcher bei koaxialer Anordnung ein die entstehende Flamme einhüllender Luftstrom erzeugt werden kann. Die Flamme kann durch einen einhüllenden, rotierenden Luftstrom in axial rotierende Bewegung gesetzt und damit stabilisiert werden.

In dem dargestellten Beispiel verfügt der Brenner 11, der in Figur 2a in Seitenansicht verkürzt dargestellt ist, über einen langgestreckten Grundkörper 1. Der Grundkörper 1 weist beispielsweise eine Länge von 10 m auf und ragt mit einem kopfseitigen Ende 1' in den Drehrohrofen. Am kopfseitigen Ende 1' kann im Betrieb eine Flamme mit mehreren Metern Länge erzeugt werden.

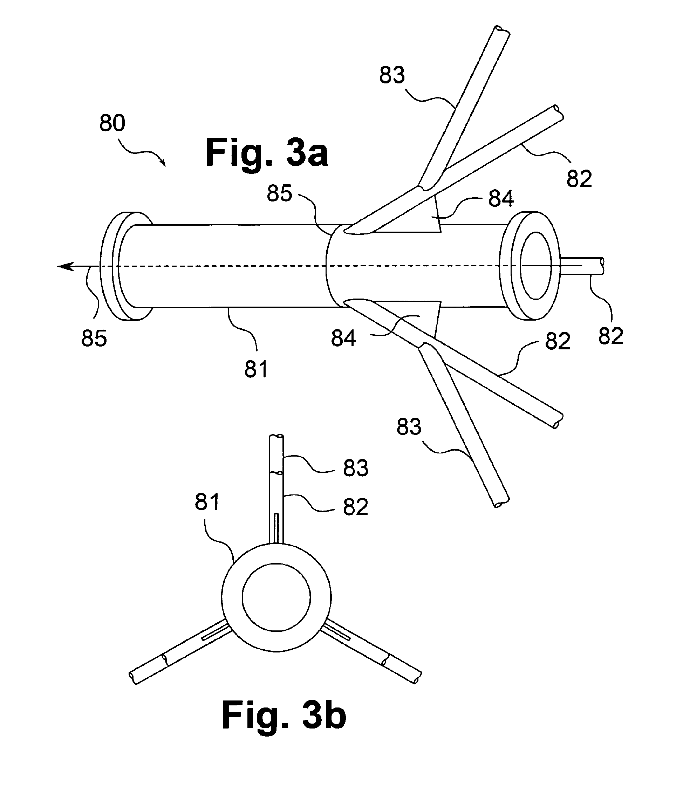

Im Grundkörper 1 sind mehrere Leitungen 2 - 9 vorgesehen, die mit entsprechenden Anschlüssen verbunden sind. Hierbei kann beispielsweise eine Leitung als Sekundärbrennstoffleitung 2 konfiguriert sein. Über die Sekundärbrennstoffleitung 2 wird dem Brenner Sekundärbrennstoff, z.B. in Form von Kunststoffschnipseln, zugeführt. Hierbei kann dem Brenner in der Sekundärbrennstoffleitung 2 ein erfindungsgemäßer Sauerstoffmischer 80 vorgeschaltet sein, der in der Figur 2a nur schematisch dargestellt ist und in Figur 3 im Detail erläutert wird. Der Sauerstoffmischer 80 ist vorzugsweise in unmittelbarer Nähe des Brenners angeordnet, um die Effekte einer Rückzündung im Störungsfall möglichst weitgehend zu minimieren.

In der Sekundärbrennstoffleitung 2 kann der Sekundärbrennstoff in Form eines Sekundärbrennstoffstroms mittels Luft gefördert werden. Der Sekundärbrennstoffleitung 2 kann, beispielsweise koaxial, eine Luftleitung zugeordnet sein, die in der Figur 2a der Übersichtlichkeit halber nicht dargestellt ist.

Weitere Anschlüsse 3 - 4 können für den Betrieb mit weiteren Brennstoffen, beispielsweise Lösemittelabfällen, Tiermehl, Klärschlamm und dergleichen eingerichtet sein. Einer der Anschlüsse 3 - 4 kann auch zur Bereitstellung einer Pilotflamme zum Zünden des Brenners eingerichtet sein. Exemplarisch ist die Leitung 5 mit einer koaxialen Luftzufuhr 7 dargestellt, die beispielsweise für eine Zerstäubung des in der Leitung 5 geförderten Brennstoffs vorgesehen sein kann.

Ein Grund- oder Primärbrennstoff, beispielsweise Kohlestaub, kann z.B. über eine Leitung 8 unter Verwendung eines entsprechenden Förderluftstroms in den Brenner eingeblasen werden. Weitere Luftanschlüsse 9 bzw. 9a und 9b können zum Einblasen sogenannter Axial- und Draliluft verwendet werden, die die sich bildende Flamme einhüllen. Durch Draliluft kann eine Drehbewegung in der Flamme induziert werden, die diese stabilisiert und/oder für ausreichenden Sauerstoff sorgt.

In der Teilfigur 2b ist eine Draufsicht auf das kopfseitige Ende 1' des Brenners 11 dargestellt. Die Axial- und Drallluftanschlüsse 9a und 9b münden, wie ersichtlich, koaxial zu einer ringförmigen Primärbrennstoffleitung 8 in die Brennzone. In beiden Kanälen 9a und 9b sind mit 9a' und 9b' bezeichnete Luftleitelemente und Drallkörper schematisch dargestellt, die beispielsweise schräg in den Kanälen angeordnet sein können und eine entsprechende Drallbewegung induzieren. Eine Mündung des Anschlusses 5 kann beispielweise ist koaxial von mit der Mündung des Luftanschlusses 7 umgeben sein, durch den sogenannte Hilfszerstäuberluft zugeführt wird. Ferner können sogenannte Zusatzluftöffnungen 6 vorgesehen sein, die eine Einbringung zusätzlicher Luft in die Brennzone ermöglichen können. Zusätzlich können sogenannte Lösemittellanzen mit diesen zugeordneten Luftkanälen sowie Pilotbrenner zur Zündung vorgesehen sein.

In den Teilfiguren 3a und 3b der Figur 3 ist ein Sauerstoffmischer 80 gemäß einer besonders bevorzugten Ausführungsform der Erfindung in Seitenansicht (Figur 3a) und Draufsicht (Figur 3b) dargestellt.

Der Sauerstoffmischer 80 weist ein Zentralrohr 81 auf, in der ein Sekundärbrennstoffstrom im Betrieb in einer Richtung entsprechend Pfeil 85 strömt. In einem spitzen Winkel zur dieser Richtung sind Einlassdüsen 82 in Form zylindrischer Rohre vorgesehen, die im Betrieb mit Sauerstoff oder einem sauerstoffhaltigen Gasstrom gespeist werden. Der Anstellwinkel der Einlassdüsen 82 beträgt beispielsweise 30°. Die Einlassdüsen 82 sind gleichmäßig um einen Umfang 85 des Zentralrohrs 81 angeordnet. Im dargestellten Beispiel sind drei Einlassdüsen 82 vorgesehen, die aus der Bildebene nach hinten ragende Einlassdüse 82 ist dabei teilweise von dem Zentralrohr 81 verdeckt.

In die Sauerstoffleitungen 82 münden jeweils weitere Zuleitungen 83, über die, wie erläutert, beispielsweise ein Luftstrom zur Verhinderung einer Blockade der Sauerstoffzuleitungen 82 mit Sekundärbrennstoff eingebacht sind. Stickstoff zum Löschen einer thermischen Reaktion wird über das Rohr 82 eingetragen, nachdem die Zufuhr von Sauerstoff bzw. des sauerstoffreichen Stroms abgeschaltet wurde.

Die Luft wird in der Sauerstoffleitung 82 zentral geführt und/oder ist von einem umhüllenden N₂-oder O₂-Ringspalt umgeben.

Der Sauerstoffmischer 80 verfügt über nicht dargestellte Regel-, Steuer- und/oder Dosiereinheiten, die eine gezielte Zudosierung der entsprechenden gasförmigen Medien ermöglichen. In den Sauerstoffzuleitungen 82 und/oder in der Hauptleitung 81 können Temperatur- und Drucksensoren verbaut sein. Die Temperatursensoren können dabei das Auftreten einer erfolgten oder sich ausbreitenden Rückzündung in der Hauptleitung 81 über einen Temperaturanstieg detektieren.

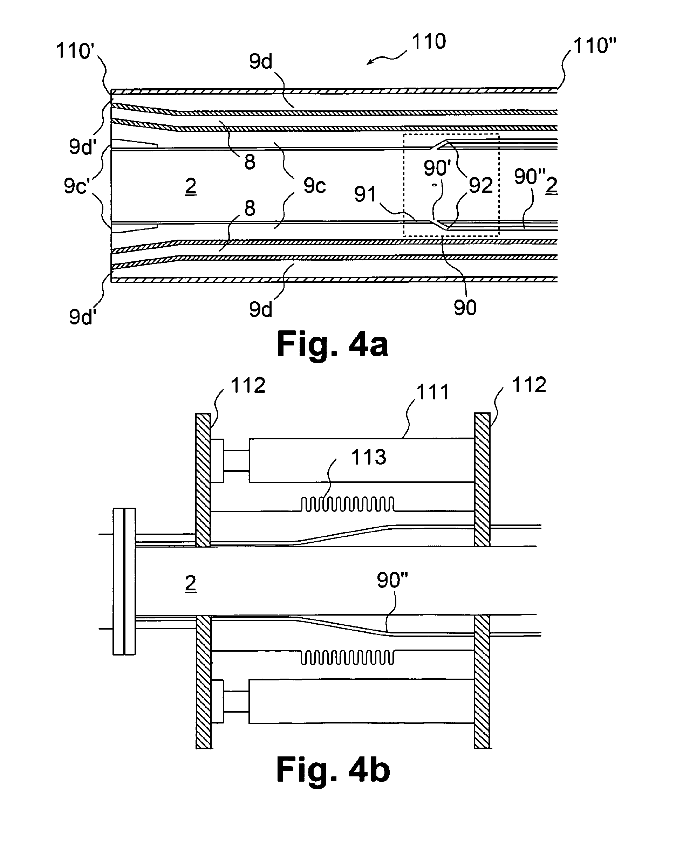

In Figur 4 ist ein weiterer Brenner im Längsschnitt schematisch dargestellt und insgesamt mit 110 bezeichnet. Die Teilfigur 4a zeigt einen Brennerkopf, am linksseitigen Ende 110' treten die zugeführten Medien aus dem Brenner aus und gelangen in die Brennzone. Das rechtsseitige Ende 110" ist angeschnitten dargestellt. Wie erläutert, weisen entsprechende Brenner beispielsweise eine Länge von bis zu 10 m auf, der Brennerdurchmesser beträgt am Brennerkopf beispielsweise 60 cm.

Der Brenner 110 weist eine zentral angeordnete Sekundärbrennstoffleitung 2 auf, in der ein Sekundärbrennstoffstrom, z.B. mittels Luftförderung, in Richtung des linksseitigen Endes 110' in die Brennzone gefördert wird. Die Sekundärbrennstoffleitung 2 ist koaxial von einer Luftleitung 9c umgeben, mittels derer ein die entsprechender Luftstrom erzeugt werden kann. Zur Stabilisierung der Verbrennung wird hierbei sogenannte Dralluft über die schräggestellte Drallkörper 9c' erzeugt.

Die Luftleitung 9c ist ihrerseits koaxial von einer Primärbrennstoffleitung 8 umgeben, in der beispielsweise Kohlestaub gefördert wird. In weiteren Leitungen 9d wird sogenannte Jetluft mittels Düsen 9d' in die Brennzone eingebracht.

Der gestrichelt umfasste Bereich des Brenners 110 ist als Sauerstoffmischer 90 realisiert, wobei das entsprechende Zentralrohr hier integral mit der Sekundärbrennstoffleitung 2 ausgebildet ist. Wie bei dem in Figur 3 erläuterten Sauerstoffmischer 80 sind Einlassdüsen 92 vorgesehen, in denen eine Zuleitung von Sauerstoff oder anderer Gase erfolgen kann. Die Einlassdüsen 92 münden in einem Mündungsbereich 90' in einem spitzen Winkel zur Achse des Zentralrohrs 91 bzw. der Sekundärbrennstoffleitung 2 in diese. Wie bei dem in Figur 3 erläuterten Sauerstoffmischer 80 können auch hier weitere Elemente wie Zuleitungen, Mischer, Regler und dergleichen realisiert werden. Ein Bereich 90" der Düsen 92 dient als Zuleitung und verläuft parallel zur Sekundärbrennstoffleitung 2. Vorteilhafterweise sind bei dem Brenner 110 vier Einlassdüsen 92 vorgesehen, die jeweils in Winkeln von 90° zueinander um das Zentralrohr 91 angeordnet sind.

Die Teilfigur 4b zeigt einen Längsschnitt durch beispielhaft ausgeführte Durchführung der Sauerstoffzuleitung 90" in den Brenner 110. Diese verfügt über nicht näher erläuterte Pneumatikzylinder 111 zum Verschieben der Brennerohre gegeneinader zur Beeinflussung der Flamme sowie Dehnungsausgleicher 113 und Befestigungsflansche 112. Wie ersichtlich, werden die Zuleitungen 90" der Düsen 92 des Sauerstoffmischers durch die Basis des Brenners 110 nach außen geführt.

## Patentansprüche

1. Verfahren zur Herstellung von Zementklinker durch Sintern von Rohmehl unter Verwendung wenigstens eines zumindest zeitweise mit wenigstens einem Sekundärbrennstoffstrom befeuerten Brenners (11, 110), insbesondere in einem Drehrohrofen (10), **dadurch gekennzeichnet, dass** der wenigstens eine Sekundärbrennstoffstrom zumindest zeitweise mit einem Gasstrom beaufschlagt wird, der einen Sauerstoffgehalt von mehr als 21 Volumenprozent aufweist.

2. Verfahren nach Anspruch 1, bei dem ein partikulärer, mit Luft geförderter Sekundärbrennstoff als der wenigstens eine Sekundärbrennstoffstrom verwendet wird, wobei dem Sekundärbrennstoffstrom der Gasstrom vor der Verbrennung in einem Sauerstoffmischer (80, 90) beigemischt wird.

3. Verfahren nach Anspruch 1 oder 2, bei dem durch die Beaufschlagung mit dem Gasstrom wenigstens ein mit Sauerstoff angereicherter Sekundärbrennstoffstrom erzeugt wird, der einen Sauerstoffgehalt von 21 bis 100 Volumenprozent, insbesondere von 30 bis 40 Volumenprozent aufweist.

4. Verfahren nach einem der vorstehenden Ansprüche, bei dem der wenigstens eine Sekundärbrennstoffstrom granulierte Kunststoffabfälle, Kunsstoffschipsel, getrocknete hoch- und niederkalorische biologische Abfälle, Klärschlamm und/oder Tiermehl aufweist.

5. Brenner (11, 110) zum Sintern von Rohmehl zu Zementklinker, insbesondere für einen Drehrohrofen (10), der zur Befeuerung mit wenigstens einem Sekundärbrennstoffstrom eingerichtet ist und wenigstens eine Sekundärbrennstoffleitung (2) aufweist, **dadurch gekennzeichnet, dass** die wenigstens eine Sekundärbrennstoffleitung (2) wenigstens einen Sauerstoffmischer (80, 90) umfasst, der zur Beaufschlagung des wenigstens einen Sekundärbrennstoffsstroms mit einem Gasstrom eingerichtet ist, der einen Sauerstoffgehalt von mehr als 21 Volumenprozent aufweist.

6. Brenner (11, 110) nach Anspruch 5, bei der der Sauerstoffmischer (80, 90) ein Zentralrohr (81, 91) zum Leiten des Sekundärbrennstoffsstroms und wenigstens eine in das Zentralrohr (81, 91) mündende Einlassdüse (82, 92) aufweist.

7. Brenner (11, 110) nach Anspruch 6, bei der die wenigstens eine Einlassdüse (82, 92) in einem spitzen Winkel zur Achse des Zentralrohrs (81, 91) und/oder zu einer Fließrichtung des Sekundärbrennstoffstroms in das Zentralrohr (81, 91) mündet.

8. Brenner (11, 110) nach Anspruch 6 oder 7, bei der mehrere Einlassdüsen (82, 92) vorgesehen sind, die wenigstens teilweise gleichmäßig um einen Umfang des Zentralrohrs (81, 91) verteilt angeodnet sind.

9. Brenner (11, 110) nach einem der Ansprüche 6 bis 8, bei der die wenigstens eine Einlassdüse wahlweise zumindest mit dem Gasstrom, mit Luft und/oder mit Stickstoff gespeist werden kann.

10. Brenner (11, 110) nach Anspruch 9, bei der der Sauerstoffmischer (80, 90) wenigstens einen Druck- und/oder wenigstens einen Temperatursensor aufweist und Mittel vorgesehen sind, um die wenigstens eine Einlassdüse nach Maßgabe eines mittels des wenigstens einen Druck- und/oder des wenigstens einen Temperatursensors wahlweise mit dem Gasstrom, mit Luft und/oder mit Stickstoff zu speisen.

11. Brenner (11, 110) nach einem der Ansprüche 5 bis 10, bei der ein Sauerstoffmischer (90) in dem Brenner und/oder ein Sauerstoffmischer (80) unmittelbar vor dem Brenner oder stromaufwärts hiervon angeordnet ist.

12. Anlage zur Herstellung von Zementklinker aus Rohmehl, die zur Durchführung eines Verfahrens nach einem der Ansprüche 1 bis 4 eingerichtet ist und einen mit wenigstens einem Brenner (11, 110) nach einem der Ansprüche 5 bis 11 befeuerten Drehrohrofen (10) aufweist.
